Europäisches Patentamt

European Patent Office

Office européen des brevets

(11) Publication number: 0 497 553 A1

# EUROPEAN PATENT APPLICATION

(21) Application number: 92300713.2

(22) Date of filing: 28.01.92

(51) Int. Cl.⁵: **A23P 1/08**, A21D 13/00, A23L 1/01, A23L 1/317

(30) Priority: **01.02.91 US 650390**

(43) Date of publication of application:
**05.08.92 Bulletin 92/32**

(84) Designated Contracting States:
**AT BE CH DE DK ES FR GB GR IT LI LU MC NL PT SE**

(71) Applicant: **OSCAR MAYER FOODS CORPORATION**
**910, Mayer Avenue**
**Madison Wisconsin 53707(US)**

(72) Inventor: **Popenhagen, Gerald R.**
**4885 Foxfire Trail, Middleton**
**Wisconsin 53562(US)**
Inventor: **Larson, Susan C.G.**
**7301 Friendship Lane, Middleton**
**Wisconsin 53562(US)**
Inventor: **Fullmer, Mary K.**
**817 Henry Street, Waunakee**
**Wisconsin 53597(US)**
Inventor: **MacBride, Maurine A.**
**6153 Sun Valley Parkway, Oregon**
**Wisconsin 53575(US)**

(74) Representative: **Eyles, Christopher Thomas et al**
**W.P. THOMPSON & CO. High Holborn House**
**52-54 High Holborn**
**London WC1V 6RY(GB)**

(54) **Microwavable sandwiches.**

(57) Sandwiches (10) which are ready to be eaten after being heated in a microwave oven and which contain at least two different product or filler layers (e.g. 11, 12, 13) which heat at dissimilar rates in a microwave oven with at least one of the layers (11) containing at least one irregularity in the form of a hole or holes or indentation or indentations (6) or a protuberance or protuberances which allows the two or more layers (11, 12, 13) to be simultaneously heated to desired eating temperature when the sandwich is heated in a microwave oven. Preferably an irregularity is not visible when a consumer removes an outer layer (14, 15) of the sandwich.

FIG. 1.

Rank Xerox (UK) Business Services

## BACKGROUND AND DESCRIPTION OF THE INVENTION

This invention relates generally to improvements and innovations in sandwiches which are ready to be eaten after having been heated in a microwave oven and which contain at least two filler layers formed of different food products which heat at different rates in a microwave oven. By modifying the configuration or cross section of at least one of the two dissimilar filler layers so that it contains a suitable irregularity, the heating rate of that layer can be accelerated or slowed so that the two layers will reach acceptable eating temperature at approximately the same time when the sandwich is heated in a microwave oven.

In the field of convenience foods, microwavable prepared sandwiches have become increasingly popular particularly in retail, convenience stores, fast food restaurants, cafeterias, snack bars, vending machines and similar markets. Often the demand is for microwavable sandwiches which contain two or more filler layers composed of dissimilar food products. Such dissimilar filler layers will often have substantially different rates of heating in a microwave oven to acceptable eating temperature. For example, a breakfast sandwich may comprise a layer of a precooked sausage patty, a layer of a precooked egg patty and a slice of cheese, between biscuit halves. When such a sandwich is heated in a microwave oven, the egg patty can heat at a much slower rate than either the sausage patty or the cheese slice and also much slower than the biscuit halves. Consequently, by the time the egg patty layer has been heated to a desired eating temperature, the sausage patty can be overheated and the cheese slice may have been excessively melted. Frequently, sandwiches will be prepared in advance and held in a frozen or refrigerated condition prior to being heated in a microwave oven. The resulting increase in temperature to bring a frozen or refrigerated sandwich to eating temperature magnifies the problem of dissimilar heating rates of dissimilar filler layers. Heretofore, the objective in heating microwavable sandwiches made with two or more filler layers having appreciably different microwave heating rates has been to heat sufficiently to bring all filler layers up to acceptable eating temperatures while avoiding any layer being either overheated or underheated. In practice, this objective has been difficult to achieve since the tendency has been for one layer to be either over or under heated without any filler layer being heated to its preferred eating temperature.

In accordance with the present invention, it has been found that the problem of uneven heating of dissimilar filler layers in a microwavable sandwich can be satisfactorily dealt with by providing at least one of the dissimilar filler layers with a geometric modification or irregularity so as to appropriately modify (i.e. increase or decrease) the rate at which the modified layer(s) heat(s) when the sandwich is heated in a microwave oven. The geometric modification of a sandwich filler layer will depend on whether it is desired to increase or decrease the microwavable heating rate of that layer. For example, if it is desired to increase the heating rate of a filler layer, such as an egg patty, the center of the egg patty will be provided with a hole or an indentation or cavity such as a dimple or disc shaped recess. On the other hand, if it is desired to delay the heating rate of the a filler layer (e.g. a sausage patty) the center of the patty can be provided with a protuberance in the form of a dome or disc. It will be seen that it may suffice to provide only one of two or more dissimilar layers with an irregularity or it may be desirable to provide more than one of the layers with an irregularity.

It is considered important in the practicing of the invention that the geometric modification or irregularity imparted to a filler slice of a sandwich to modify its microwave heating rate, not detract from the normal appearance and eating quality of a sandwich heated in a microwave oven. This objective can usually be achieved by arranging the filler layers so that if the top or bottom of a sandwich is removed, the exposed surface of the exposed filler layer will have a normal appearance and not contain a dimple or other irregularity.

In view of the foregoing, the object of the invention, generally stated, is the provision of prepared sandwiches which are in excellent condition to be eaten after being heated in a microwave oven and which contain at least two different filler layers formed of different food products which heat at dissimilar rates in a microwave oven and with at least one of the layers having been geometrically modified so as to appropriately increase or decrease its heating rate depending upon the microwave heating rate of the other filler layer or layers.

A further object of the invention is to provide such microwavable sandwiches which do not appear to have been modified in appearance and eating quality even though at least one filler layer has been geometrically modified by incorporating therein an irregularity in cross section such as a hole(s), indentation(s) or protuberance(s).

Another object of the invention is the provision of such microwavable sandwiches characterized by exhibiting the benefits of: improved product quality, particularly after heating; increase of consumer convenience (i.e. shorter heating times with even heating of components); increased consumer satisfaction (i.e. more consistent results); and increased probability of fewer cold spots and fewer possible microbiological issues.

Additional important objects of the invention will become apparent from the following detailed description of several embodiments of the invention taken in connection with the accompanied drawings, wherein:

BRIEF DESCRIPTION OF THE DRAWINGS

Fig. 1 is a vertical sectional view through a sandwich having filler layers in the form of a precooked sausage patty, a precooked egg patty and a cheese slice between two biscuit slices;

Fig. 2 is a plan view of the bottom of the egg patty taken on line 2-2 of Fig. 1;

Fig. 3 is a diagrammatic vertical sectional view through an egg patty mold which may be used in practicing the invention with a modification shown in broken line; and

Figs. 4-14 are diagrammatic views of eleven different sandwiches illustrating embodiments of the invention.

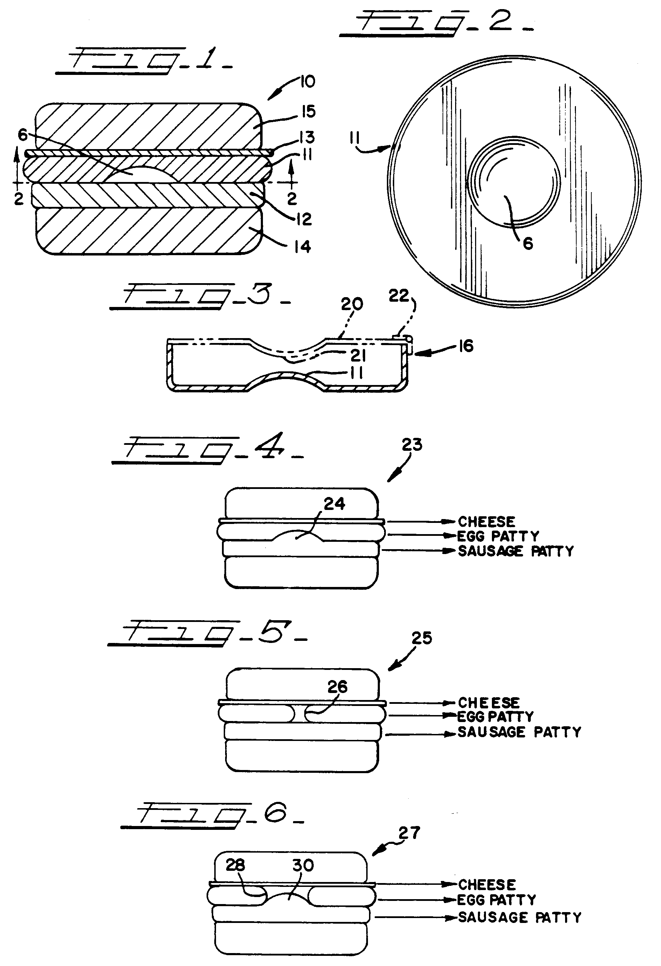

Referring to Fig. 1, a sandwich is indicated generally at 10 comprising bottom and too slices 14 and 15, respectively of a biscuit, roll, bun or English muffin between which are disposed three filler layers, middle layer 11 being a precooked egg patty, bottom layer 12 being a precooked sausage patty and top layer 13 being a cheese slice. The sausage patty 12 and cheese slice 13 have generally uniform cross sections while the egg patty 11 is of generally uniform cross section except that it is provided with an irregularity in the center in the form of a dimple shaped indentation or cavity 6. Normally, the egg patty 11 would heat slower than the sausage patty 12 if it were not provided with the center dimple or irregularity 6. However, due to the presence of the dimple 6, the egg patty 11 and sausage patty 12 will heat to a uniform temperature in a microwave oven in approximately the same heating time.

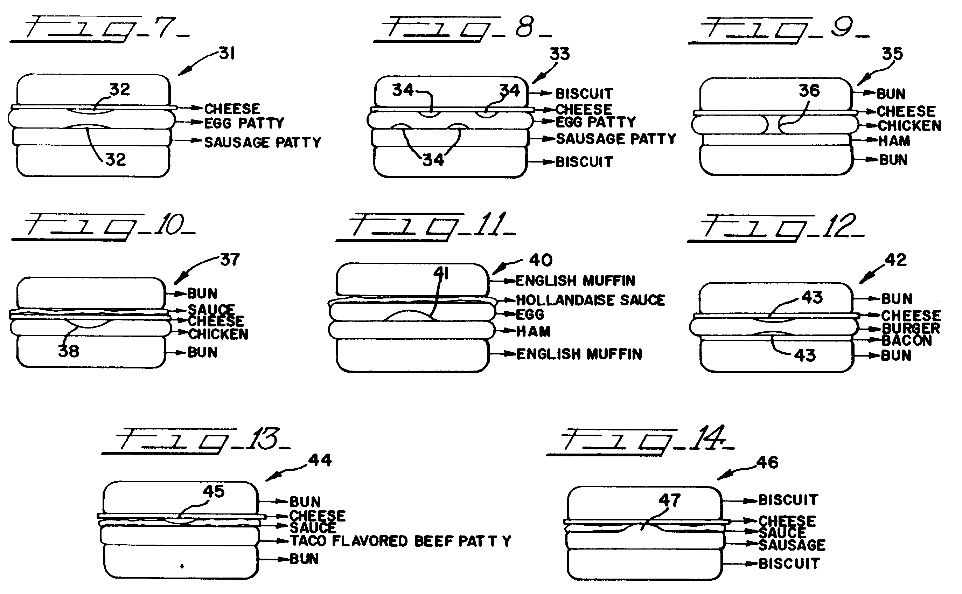

The precooked egg patty 11 may be prepared from a fluid egg mix cooked in molds such as the mold 16 shown in Fig. 3. For example, the egg patty 11 may have a diameter between 3/4 inch to $4\frac{1}{2}$ inches (19.05 to 114.3 mm) and a weight of between 1.5 to 10 ounces (42.5 to 283.5 g). The dimple 6 may have a diameter of approximately $\frac{1}{2}$ inch (12.7 mm) and a center depth of approximately 1/8 of an inch (approximately 3.18 mm). These parameters are by way of example and may vary within practical limits, depending on the size and weight of a patty.

It will be seen that when the egg patty 11 is precooked in the mold 16 it will have a dimple 6 in one surface. If desired, dimples can be formed in opposing surfaces by providing the mold 16 with a cover 20 having a dimple formation 21 in the center thereof and hinged to the mold 10 by the hinge 22. The egg patty 11 can be used in the sandwich 10 which can be frozen and thereafter heated in a microwave oven to a suitable internal eating temperature of approximately 120°F to 190°F (approximately 48.9°C to 87.8°C). This provides for optimum product quality and safe eating temperatures.

The optimum shape of the sandwich 10 and its components is round or circular. When the round or circular shape is departed from, e.g. from circular to octagonal to hexagonal to square, the potential advantages of the invention tend to progressively diminish. However, the presence of a dimple, dome or other irregularity makes such non-round shapes more suitable for microwaving than if it was not present.

In Fig. 4, a microwavable sandwich is indicated generally at 23 which corresponds to sandwich 10 of Fig. 1 in having filler layers comprising a middle egg patty, a bottom sausage patty and a top cheese slice. However, the sausage patty of sandwich 23 differs from the sausage patty 12 of sandwich 10 in that it has a center dome 24 which fills the dimple 6 in the egg patty 11. The presence of the dome or protuberance 24 tends to slow the rate at which the sausage patty cooks which may be desirable depending upon the relative thicknesses and microwave heating characteristics of the sausage and precooked egg patties.

In Fig. 5, a sandwich is indicated generally at 25 with filler layers of a sausage patty, egg patty and cheese slice with the egg patty having a center hole 26. It is known in microwave cooking that providing a hole in the center of an item to be cooked will tend to accelerate the rate at which it can be cooked or heated in a microwave oven.

In Fig. 6, still another sandwich is indicated generally at 27 also comprising filler layers of sausage patty, egg patty and a cheese slice and wherein the egg patty has a central hole or opening 28 into the bottom of which a dome shaped protuberance 30 on the center of the sausage patty protrudes. In Fig. 7, still another sandwich is indicated generally at 31 also having a filling comprising a sausage patty, an egg patty and a cheese slice in which the egg patty is provided with dimple shaped center indentations 32-32 on opposite sides.

In Fig. 8, another sandwich is indicated generally at 33 with a filling comprising a sausage patty, an egg patty and a cheese slice. In this embodiment, the opposite faces of the egg patty are provided with a plurality of relatively small dimple shaped indentations 34-34. The presence of the dimples 34 increases the rate of heating of the egg patty in a microwave oven.

The sandwiches illustrated in Fig. 1 and Figs. 4-8 are all filled with the same components, i.e. a precooked sausage patty, a precooked egg patty and a cheese slice. The six sandwiches differ in that the egg patties, and in certain instances the sausage patties, are geometrically modified so as to have one or more different irregularities therein in the form of a hole or an indentation or a protuberance.

In Figs. 9-14, six sandwiches are illustrated by way of example formed from different components than the sandwiches illustrated in Fig. 1 and Figs. 4-8. Thus, in Fig. 9, a sandwich is indicated generally at 35 comprising between top and bottom halves of a bun, a slice of ham, a slice of precooked chicken and a slice of cheese. Since the slice of chicken tends to heat slower in a microwave oven than the other components it is provided with a center hole 36 so that it heats in a microwave at a faster rate.

The chicken parmesan sandwich 37 in Fig. 10 comprises a chicken patty or slice, a cheese slice and parmigiana sauce between top and bottom slices of a bun. Since the chicken patty has the slowest rate of heating in a microwave oven, it is provided with a center dimple 38 in its top surface. In Fig. 11, an Eggs Benedict Sandwich is indicated generally at 40 wherein between top and bottom halves of an English muffin, there is a bottom layer or slice of ham, a precooked egg patty and a top layer consisting of hollandaise sauce. Since the egg patty heats up at a slower rate in a microwave oven than the ham layer, the egg patty is provided with a center dimple 41 in one side so as to increase its rate of heating to approximately the rate of heating of the ham slice when the sandwich 40 is heated to comfortable eating temperature in a microwave oven.

In Fig. 12, a Bacon Cheeseburger sandwich is indicated generally at 42 wherein a precooked burger patty is placed between a layer of bacon on the underside and a cheese slice on the top. The burger patty is provided with center dimples 43-43 in its opposite faces so as to increase its heating rate to be compatible with the rates at which the bacon and cheese layers increase in temperature when the sandwich is heated in a microwave oven. A taco burger is illustrated and designated generally at 44 in Fig. 13 with the filling comprising a bottom layer of precooked taco flavored beef patty, a middle layer of taco sauce, and a top layer of cheese. Since the sauce layer tends to heat slower than the beef patty, the sauce layer is provided with a dimple shaped indentation 45 so that the rate at which the sauce heats is increased and therefore is compatible with the rate at which the beef patty heats when the sandwich 44 is heated in a microwave oven.

In Fig. 14, a sandwich is illustrated and designated generally at 46 wherein between top and bottom slices of a biscuit there is a filling comprising a bottom layer of precooked sausage, an intermediate layer of fried apples and a top layer of cheese. Since the rate at which the layer of apple sauce heats in a microwave oven is slower than the rate at which the sausage patty heats, the apple sauce layer is provided with a hole in the center and the sausage patty is provided with a protuberance 47 in its upper surface which fills the hole in the apple sauce layer thereby balancing the rates at which the apple sauce layer and the sausage patty layer heat when the sandwich 46 is heated in a microwave oven.

It will be seen that in all of the sandwiches shown in Fig. 1 and Figs. 4-14, when the top or bottom of a sandwich is removed that the surface of the filler layer that will be exposed will be uninterrupted or smooth and present a normal appearance. Thus, in all of the sandwiches, the irregularities in the form of the dimples, holes or domes will be concealed within each sandwich filling.

If desired, instead of making the indentations in the form of dimples and the protuberances in the form of domes, they can be made in the form of discs.

These geometric irregularities as well as the sandwiches themselves may be circular, semi-circular, oval or multi-sided, e.g. diamond shaped, hex shaped, square, or otherwise shaped. Further, the irregularities may vary in depth and shape in cross section. Further, they may vary in size, number and arrangement and may be located in one side of a filler layer or in opposite sides.

The prepared or pre-assembled sandwiches of the invention may vary in size (e.g. from 3/4 to 4½ inches [19.05 to 114.3 mm] in diameter), in weight (e.g. from 1.5 to 10 ounces [from 42.5 to 283.5 g]), in the order and arrangement of the components (i.e. filler layers), and the condition of the components (i.e. raw, precooked, fresh or frozen).

It will be understood that the sandwiches shown in the drawings and described in connection therewith are exemplars of the invention and are not intended to be limiting or include all embodiments of the invention that come within the scope of the claims.

In this specification the term "biscuit" has the meaning normally ascribed to it in the U.S.A.; in the U.K. the term "scone" would probably be used instead.

## Claims

1. A sandwich which is ready to be eaten after being heated in a microwave oven and which is comprised of at least two different filler layers which are composed of food products that normally heat at different rates in a microwave oven, at least one of said layers having a modified configuration which allows said filler layers to be simultaneously heated to desired eating temperatures when said sandwich is heated in a microwave oven.

2. A sandwich which is ready to be eaten after being heated in a microwave oven and which is comprised of at least two different filler layers which are composed of food products that normally heat at different rates in a microwave oven, at least one of said layers having a non-uniform cross-section due to the presence of at least one irregularity in the form of a hole, or an indentation or a protuberance, said irregularity allowing said two layers to be simultaneously heated to desired eating temperatures when said sandwich is heated in a microwave oven.

3. A sandwich according to claim 2, wherein said irregularity is not visible when the top or bottom of said sandwich is removed.

4. A sandwich according to claim 2, wherein when the top or bottom is removed an uninterrupted surface of a filler layer is exposed.

5. A sandwich according to any one of claims 2 to 4, wherein said irregularity is in the shape of a dimple, dome or disc.

6. A sandwich according to any one of claims 2 to 5, wherein said irregularity allows said sandwich to be heated to desired eating temperature in a minimum time.

7. A sandwich according to any one of claims 2 to 6, wherein said irregularity is in the shape of an indentation or cavity which accelerates the rate of heating the layer containing the irregularity.

8. A sandwich according to any one of claims 2 to 6, wherein said irregularity is in the shape of a protuberance which slows the rate of heating the layer containing the irregularity.

9. A sandwich according to any one of claims 2 to 6, wherein one said layer contains an irregularity in the shape of an indentation and the other said layer contains an irregularity in the shape of a protuberance.

10. A microwavable sandwich comprising the top and bottom of a sandwich and a filling comprising a meat patty, a slice of cheese and a precooked microwavable egg patty having an attenuated center portion with the surrounding remaining portion having substantially uniform thickness.

11. A filler layer for a microwavable sandwich which layer has an attenuated center portion with the surrounding remaining portion having substantially uniform thickness.

12. A generally circular microwavable sandwich comprising the top and bottom halves of a round sandwich and a filling comprising a round meat patty, a slice of cheese and a cooked microwavable egg patty which is generally circular in shape and is formed with an attenuated circular center portion and a surrounding annular portion having substantially uniform thickness.

13. A filler layer for a microwavable sandwich which layer is generally circular in outline shape and is formed with an attenuated circular center portion and a surrounding annular portion having substantially uniform thickness.

14. A microwavable sandwich according to claim 12, or a filler layer according to claim 13, wherein said attenuated center portion is provided by a circular dimple formation in at least one of its opposing top and bottom surfaces.

15. A microwavable sandwich according to claim 12, or a filler layer according to claim 13, wherein said attenuated center portion is provided by a circular dimple formation in only one of its opposing top and bottom surfaces.

16. A microwavable sandwich in a filler layer according to claim 14 or 15, wherein said circular dimple formation is arcuately convex.

17. A microwavable sandwich or a filler layer according to any one of claims 14 to 16, wherein said circular dimple formation is cylindrical.

18. A microwavable sandwich or a filler layer according to any one of claims 14 to 16, wherein said circular dimple formation is frusto-conical.

19. A microwavable sandwich containing a filler layer the upper surface of which is covered by the top part of the sandwich, said filler layer having in the underside thereof at least one indentation which increases the rate at which said filler layer may be heated to an acceptable eating temperature and condition.

**20.** A method of making a microwavable sandwich comprising at least two different filler layers composed of food products that normally heat at appreciably different rates in a microwave oven, characterised in that it comprises using a filler layer having a modified configuration which allows said filler layers to be simultaneously heated to desired eating temperatures when said sandwich is heated in a microwave oven.

**21.** A method of making a microwavable sandwich filled with a meat patty, an egg patty and a cheese slice, characterised in that it comprises using a precooked egg patty having an attenuated center portion.

FIG.1.

FIG.2.

FIG.3.

FIG.4.

CHEESE
EGG PATTY
SAUSAGE PATTY

FIG.5.

CHEESE
EGG PATTY
SAUSAGE PATTY

FIG.6.

CHEESE
EGG PATTY
SAUSAGE PATTY

## FIG_7_

31

CHEESE
EGG PATTY
SAUSAGE PATTY

## FIG_8_

33

BISCUIT
CHEESE
EGG PATTY
SAUSAGE PATTY
BISCUIT

## FIG_9_

35

BUN
CHEESE
CHICKEN
HAM
BUN

## FIG_10_

37

BUN
SAUCE
CHEESE
CHICKEN
BUN

## FIG_11_

40

ENGLISH MUFFIN
HOLLANDAISE SAUCE
EGG
HAM
ENGLISH MUFFIN

## FIG_12_

42

BUN
CHEESE
BURGER
BACON
BUN

## FIG_13_

44

BUN
CHEESE
SAUCE
TACO FLAVORED BEEF PATTY
BUN

## FIG_14_

46

BISCUIT
CHEESE
SAUCE
SAUSAGE
BISCUIT

EP 0 497 553 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-3 108 703 (DR. OETKER TIEFKüHLKOST)<br>* the whole document *<br>--- | 1,2,5-7<br>13,19,20 | A23P1/08<br>A21D13/00<br>A23L1/01<br>A23L1/317 |
| A | FOOD PRODUCT DEVELOPMENT<br>July 1979, 'Microwave Technology Points to Creative Routes for New Products Ideas, Developments'<br>Pages 36, 37, 44<br>* page 36, right column, paragraph 3 *<br>* page 37, left column, paragraph 2 *<br>----- | | |

TECHNICAL FIELDS
SEARCHED (Int. Cl.5)

A23P
A23L
A21D

The present search report has been drawn up for all claims

| Place of search | Date of completion of the search | Examiner |
|---|---|---|
| THE HAGUE | 24 APRIL 1992 | VUILLAMY V.M.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)